# EUROPEAN PATENT SPECIFICATION

(11) **EP 4 522 938 B1**
(45) Date of publication and mention of the grant of the patent: **10.06.2026**
(21) Application number: 23728126.6
(22) Date of filing: 11.05.2023
(51) Int. Cl.: G01B 11/24, G01B 21/04, G01B 11/04

(54) **DETECTION SYSTEM AND METHOD TO DETECT CERAMIC ARTICLES**
DETEKTIONSSYSTEM UND VERFAHREN ZUR DETEKTION VON KERAMIKARTIKELN
SYSTÈME ET PROCÉDÉ DE DÉTECTION POUR DÉTECTER DES ARTICLES EN CÉRAMIQUE

(30) Priority: 12.05.2022 IT 202200009881
(43) Date of publication of application: 19.03.2025
(73) Proprietor: SACMI TECH S.p.A., 40026 Imola (BO) (IT)
(72) Inventor: TOMASINI, Tiziano, 40026 IMOLA (BO) (IT); MARANI, Andrea, 40026 IMOLA (BO) (IT); ROBERTS, Arwyn, 40026 IMOLA (BO) (IT)
(74) Representative: Studio Torta S.p.A.
(86) International application number: PCT/IB2023/054860
(87) International publication number: WO 2023/218387

(56) References cited:
- EP-A1- 3 076 162
- WO-A1-92/07234
- CN-A- 106 643 549
- CN-U- 201 819 669

## Description

### Technical Field

The present invention relates to a system and method to detect ceramic articles, in particular ceramic slabs or tiles.

The present invention finds advantageous but not exclusive application in the operation of subdividing ceramic articles (in particular, ceramic tiles) of the same format into different size groups, known as calibers, by virtue of their effective sizes.

### Background of the Invention

In the production field of ceramic articles, in particular of ceramic slabs and tiles, it is in fact known that even ceramic articles of the same format have slightly different sizes coming out from the production system of the same articles. Said dimensional differences, although per se not particularly significant, are in any case unacceptable during the installation step of the ceramic articles, as they could lead to errors or visible irregularities. Precisely to avoid said risks, the finished ceramic articles are divided, by virtue of their effective sizes, into size groups, known as calibers, and sold in groups having the same effective sizes.

To date, said subdivision of ceramic articles is achieved either by manually measuring the various ceramic articles or, in plants for the production of ceramic articles with high production volumes, by means of automatic dimensional detection systems. Said dimensional detection systems of the known type first provide for the detection of a sample/target article on the basis of which all the other ceramic articles to be measured and classified will be classified. In detail, said detection systems typically provides for a conveyor, for conveying the ceramic articles through at least one detection station, an image acquisition assembly able to acquire a plurality of images of each of the various ceramic articles located in the detection station and to compare the same with the previously acquired image of the sample/target ceramic article, so as to evaluate any deviations between the various ceramic articles to be detected and the image of the sample/target ceramic article and consequently determine the actual sizes of the various ceramic articles to be detected.

Even more in detail, in said known systems the image acquisition assembly is generally provided with four high-precision industrial video cameras, each arranged so as to be able to detect the image of one of the four vertices of each ceramic article to be detected, and electronic control system configured to combine (namely, align) the four images acquired simultaneously by the industrial video cameras, reporting them to the same reference system, so as to determine the mutual position of the four vertices of each ceramic article and evaluate any deviations from the position of the vertices of the corresponding sample/target article, and based on said comparison, the effective sizes of each ceramic article can be established. An example of a known inspection system provided with four video cameras each at the edges of the article and with an electronic control system configured to combine the acquired images is described in document CN201819669U.

It is evident that for the measurement to be reliable, once the sizes of the sample/target article have been detected, it is necessary to arrange the four video cameras so that each one intercepts a vertex of each of the ceramic articles to be measured, regardless of small dimensional variations of the different ceramic articles of each format. Furthermore, to ensure that said industrial video cameras characterized by a very small reading area, of the order of 15-20mm², always manage to acquire an image in the area of one of the vertices of the various ceramic articles, it is not enough to position the video cameras in the appropriate manner, but it is also necessary to ensure that each ceramic article arrives at the detection station with the correct orientation. Precisely for this reason, said detection systems of the known type require costly and bulky centring systems arranged upstream of the detection station and configured to centre the ceramic articles entering the detection station relative to the reciprocal position of the video cameras.

It is clear that dimensional detection systems of this type have numerous drawbacks, among which the following are mentioned.

The use of an image acquisition assembly provided with four separate industrial cameras requires, in order to obtain an overall image of the ceramic article, complex reconstruction operations, namely, alignment of the four acquired images, in a single coordinate system, with consequent drawbacks in terms of image accuracy and precision.

Furthermore, systems of this type have a major drawback linked to the fact that every time the format of the ceramic articles to be detected changes, the calibration operations must be repeated, by means of detection of the sample/target article, and the consequent positioning of the industrial video cameras, which must therefore be mounted mobile on special guides to allow the correct positioning, with a consequent increase in overall dimensions and complication of the system.

Furthermore, the fact that the calibration must be repeated at each format change, requires, among other things, manual operations for moving and positioning the sample/target article on the conveyor. Said operations, especially for large-sized products, can be very inconvenient and, in any case, require machine downtime at least for the time necessary to detect the sample/target article, with consequent economic and production efficiency disadvantages.

Other dimensional detection systems of the known type are described in the following prior documents: CN106643549 that describes a tile size detection method based on an artificial vision system; EP3076162 that describes an inspection machine for flat articles; and WO9207234 that describes a method and device for optically measuring the contours of an opaque object.

### Description of the Invention

The object of the present invention is to provide a system and a method to detect ceramic articles, which allow the limitations of the prior art to be overcome, at least in part.

According to the present invention, a system and a method to detect ceramic articles are provided, according to what is disclosed in the independent claims that follow and, preferably, in any one of the claims depending directly or indirectly on the independent claims.

The claims describe preferred embodiments of the present invention.

### Brief Description of the Drawings

The invention is described in the following with reference to the attached drawings, which illustrate some non-limiting embodiments thereof, wherein:
- Figure 1 is a schematic view of part of a system for manufacturing ceramic articles, comprising a detection system according to the present invention;
- Figure 2 is a schematic axonometry view of part of the detection system of Figure 1 according to an embodiment of the invention;
- Figure 3 is an enlarged view of a data acquisition assembly, which is part of the detection system of Figure 2, in which some parts have been outlined to better visualize the different components;
- Figure 4 is a schematic side view of a detection bar 12, which is part of the data acquisition assembly of Figure 3;
- Figure 5 is a schematic side view of a lighting device, which is part of the data acquisition assembly of Figure 3;
- Figure 6 is a schematic and top view of a ceramic article moving through the detection station and being detected by the detection system of the present invention;
- Figure 6A is a schematic representation of the detection step of the ceramic article of Figure 6 in which successive moments of the movement of the ceramic article along the detection station are shown on the left, and, on the right, a schematic representation of the data acquired by the data acquisition assembly in the different moments shown on the left;
- Figure 7 illustrates a data processing step, schematically representing the combination of the schematic representation of the ceramic article generated by the data acquisition assembly and illustrated on the right of Figure 6A, with a synchronization signal, generated by a motion sensor, for leading to the determination of the perimeter profile P of the ceramic article of Figure 6;
- Figure 8 is a schematic top view of a second ceramic article moving through the detection station and being detected by the detection system of the present invention;
- Figure 8A represents a schematic representation of the data acquired by the acquisition assembly during the passage of the ceramic article of Figure 8 through the detection station;
- Figure 9 illustrates a data processing step, schematically representing the combination of the schematic representation of the ceramic article generated by the data acquisition assembly and illustrated on the right of Figure 8A, with a synchronization signal, generated by a motion sensor, for leading to the determination of the perimeter profile P of the ceramic article of Figure 8;
- Figure 10 is a schematic top view of a second ceramic article moving through the detection station and being detected by the detection system of the present invention; and
- Figures 11 and 11A illustrate two successive moments of the calibration of the detection system of the invention.

### Preferred Embodiments of the Invention

Number 1 in the attached figures denotes as a whole a detection system of ceramic articles T.

In particular, the ceramic articles T are substantially (but not necessarily) flat articles, in particular ceramic slabs; more precisely, ceramic tiles of different formats, for example of large sizes such as those having a section of 1200/1800 x 2400/3600mm, or of smaller sizes having a section of 900/1200x1800/2000mm, up to 400x400mm), etc. and a thickness ranging from about 3 to about 50 mm, preferably from 10 mm to about 30 mm.

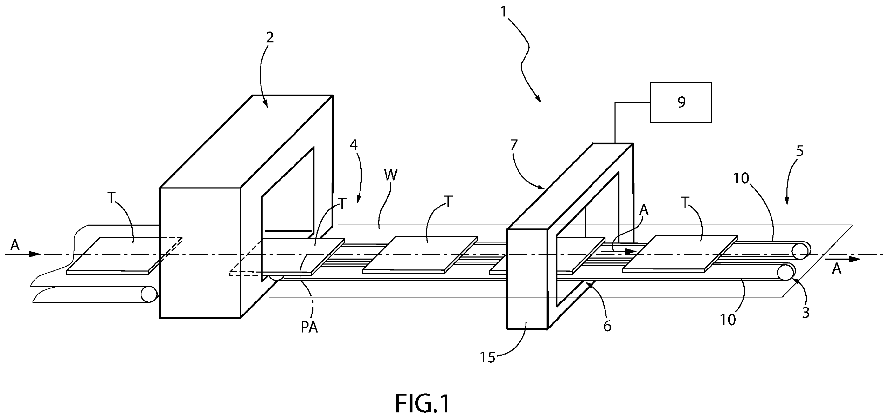

The detection system 1 of the present invention is particularly suitable for dividing the finished ceramic articles T, of the various formats mentioned above, into size groups, known as calibers. In detail, with particular reference to Figure 1, the ceramic articles T produced in production systems of the known type, after being fired and possibly subjected to subsequent processing/finishing operations in appropriate stations 2, before being packaged, are divided into size groups, known as calibers. Said subdivision into size groups therefore requires an evaluation of the actual sizes of the various ceramic articles T coming out of the system for producing ceramic articles T, which is advantageously carried out by means of the detection system 1 of the present invention. The following description will therefore make explicit reference to said use of the detection system 1, without thereby losing generality.

In particular, according to some advantageous but non-limiting embodiments (such as the one schematically illustrated in Figure 1), the detection system 1 is placed immediately downstream of a processing/finishing station 2 of finished ceramic articles T, namely already fired, and is configured to detect the perimeter profile P of said ceramic articles T. This advantageously allows to obtain information about the sizes of the ceramic articles T, but also about their shape, the orthogonality of the sides of each ceramic article T, the possible presence of imperfections and/or irregularities, etc.

With particular reference to Figures 1, 2 and 3, advantageously, the detection system 1 comprises: a conveyor 3 to move a plurality of ceramic articles T along a moving path PA in a moving direction A from an input station 4 to an output station 5 through a detection station 6; a data acquisition assembly 7, arranged at the detection station 6 and configured to acquire data on each ceramic article T located at said detection station 6 (in particular, which moves through said detection station 6 along the pre-set path PA) so as to determine a first representation R of each ceramic article T (as will be better explained hereinafter); a position detection unit 8 configured to detect the position of the ceramic article T moving through the detection station 6 along the moving path PA; and a processing assembly 9 configured to determine the perimeter profile P of the ceramic article T according to the first representation R generated by the data acquisition assembly 7 and of what is detected by the position detection unit 8.

Advantageously but not limitingly, the conveyor 3 comprises (in particular, it is) a belt conveying device having at least two parallel and spaced belts 10 which extend along the moving direction A from the input station 4 to the output station 5 and define a moving plane W, on which the ceramic articles T to be detected move (see Figure 1).

Advantageously but not limitingly, said belts 10 could be movable belts, which can be driven away from or towards one another in an orthogonal direction, in particular transversal, to the moving direction A, so as to be able to safely move ceramic articles T having formats also very different from one another.

According to alternative embodiments not illustrated, the conveyor 3 comprises (in particular, is made up of) three belts or four belts parallel and spaced apart from one another in the orthogonal direction, in particular transversal, to the moving direction A. According to yet other non-limiting and not illustrated embodiments, the conveyor 3 comprises (in particular, is) a transparent conveyor belt.

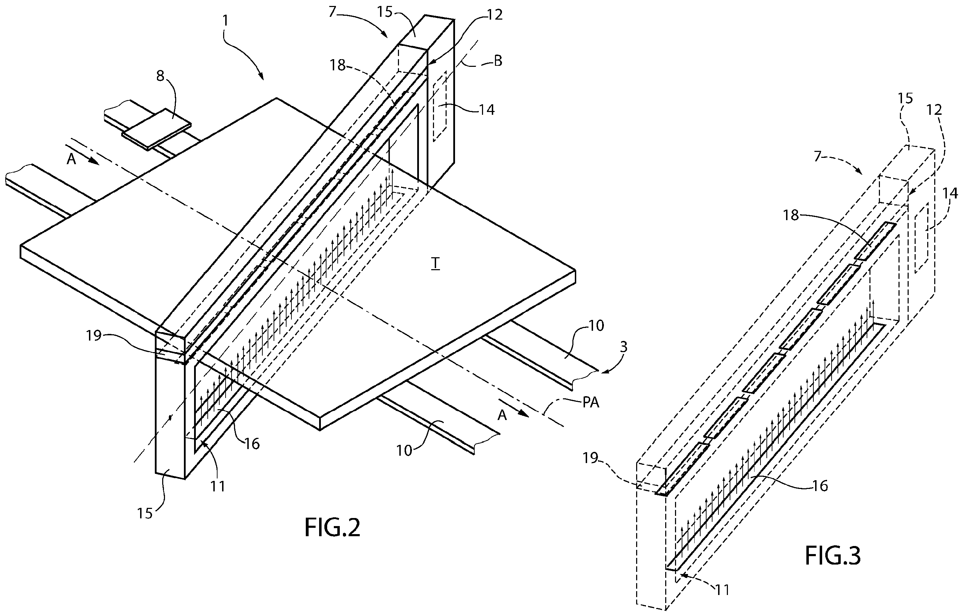

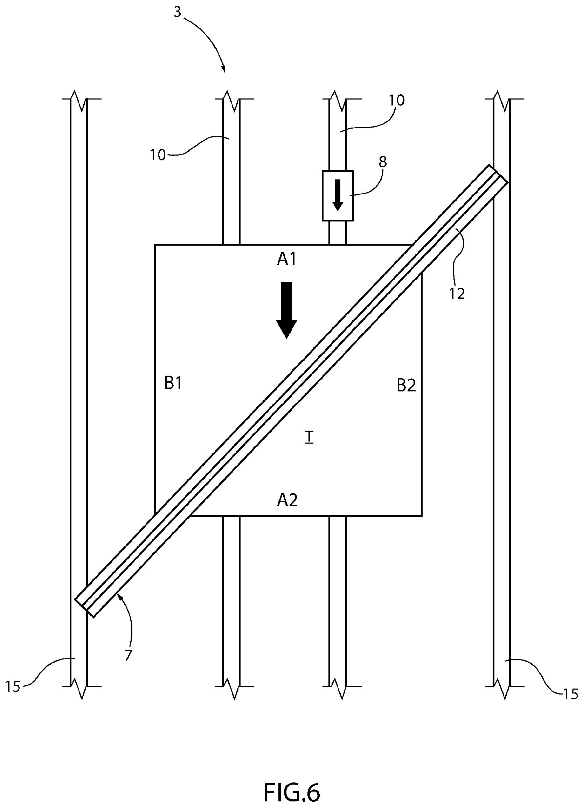

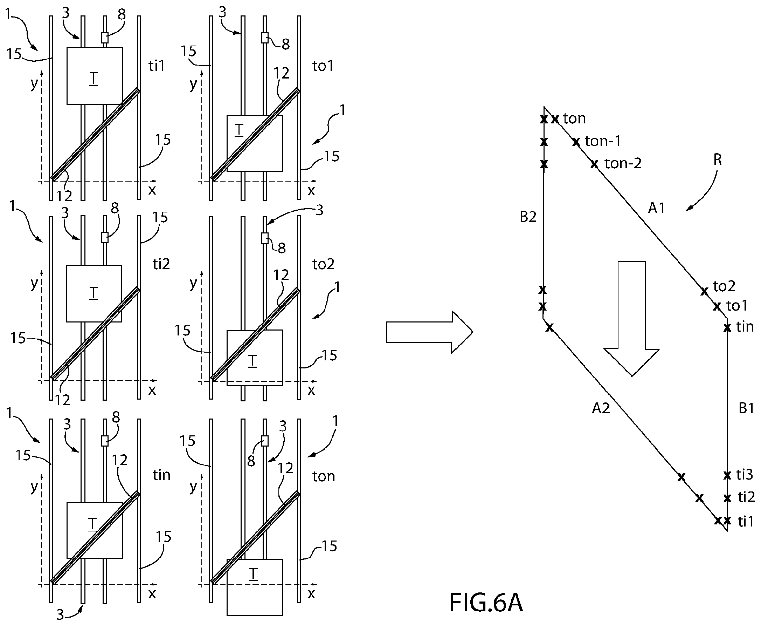

With particular reference to Figures 2, 3, 4 and 5, advantageously but not limitingly, the aforementioned data acquisition assembly 7 comprises: a lighting device 11 arranged below the conveyor 3 and configured to emit a collimated light beam towards at least one the defined area of the detection station 6 so as to illuminate from below at least a portion of the ceramic article T which is arranged at the detection station 6 (in particular, which moves through said detection station 6); a detection bar 12 that is arranged above the conveyor 3, comprises a plurality of linear photoelectric sensors 13 and is configured to acquire, at given time intervals, a respective image of the aforementioned defined area; and a control unit 14 configured to generate the already mentioned first representation R of each ceramic article T according to what is detected by the detection bar 12. In particular, the control unit 14 is configured to generate said first representation R of the ceramic article T by combining together the respective images acquired at different time intervals by the detection bar 12 (see for example Figure 6A).

According to some advantageous but non-limiting embodiments, the data acquisition assembly 7 is mounted movable relative to the conveyor 3 along the moving direction A.

In particular, according to some advantageous but non-limiting embodiments such as those illustrated in the attached figures, the detection system 1 comprises a frame 15, for example in the case illustrated, a gate which surrounds the conveyor 3 at the detection station 6 (see for example Figure 1) and carries the data acquisition assembly 7, with the detection bar 12 arranged above the conveyor 3 and the lighting device 11 parallel and opposite to the detection bar 12 on the opposite side of the conveyor 3. In particular advantageously but not limitingly, the frame 15 comprises two vertical uprights connected by two horizontal beams, an upper beam and a lower beam (relative to the conveyor 3). The upper beam carries (in particular, houses) the detection bar 12, the lower beam carries (in particular, houses) the lighting device 11, while the control unit 14 is placed (namely, contained within) one of the two uprights connecting the beams. Advantageously but not limitingly, the frame 15 can be operated in translation along an orthogonal direction, in particular transversal, to the moving direction A, so as to be able to modify the position of the data acquisition assembly 7 relative to the conveyor, in particular relative to the moving plane W, for example as the format of the ceramic articles T to be detected varies.

According to some advantageous but non-limiting embodiments (such as for example those illustrated in Figures 2, 3 and 5), the lighting device 11 of the data acquisition assembly 7 is a LED lamp which (as already explained above) is arranged parallel to the detection bar 12 and on the opposite side relative to the conveyor 3 relative to the detection bar 12. In other words, the lighting device 11 is a further bar having at least the same extension as the detection bar 12 so that the maximum defined area which can be illuminated by the lighting device 11 coincides with the maximum detection area of the detection bar 12. In particular, advantageously but not limitingly, the detection bar 12 and therefore also the lighting device 11 (namely, the LED bar) are sized so that the defined area (namely, the maximum area that can be illuminated by the lighting device 11 and detected by the detection bar 12) is such as to cover at least the length of the main diagonal of each of the ceramic articles T to be detected, namely of each format of ceramic articles T to be detected.

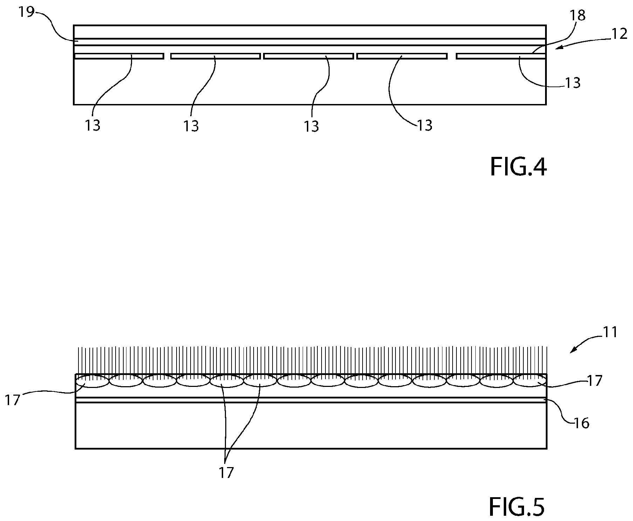

According to some advantageous but non-limiting embodiments (such as for example those illustrated in Figures 2, 3 and 5), the lighting device 11 (in particular, the LED lamp) comprises a plurality of LEDs 16 aligned with one another and an optical collimation unit 17, schematically illustrated in Figure 5, and configured to collimate the light beam (schematically illustrated with arrows in Figures 3 and 4 and with lines in Figure 5) emitted by each of the LEDs 16 so that the light beam intercepts the aforementioned area defined with an inclination perpendicular to said moving plane W. In particular, the optical collimation unit 17 is of a known type and is configured to ensure that the light beam emitted by the LEDs is coherent when it reaches the linear photoelectric sensors 13.

Advantageously but not limitingly, the collimating optical unit 17 comprises a plurality of collimating lenses, and the lighting device 11 (in particular, the LED lamp) comprises a plurality of LEDs and a plurality of shutters arranged and configured so as to focusing a plurality of light beams towards the plurality of collimating lenses.

Advantageously but not restrictively, in use, namely while a ceramic article T moves in the area of the detection station 6, the light beam emitted by the lighting device 11 and suitably collimated by the collimating optical unit 17 reaches the defined area of the detection station 6 and illuminates from below the portion of ceramic article T which occupies at least part of said defined area, projecting the shadow of said portion onto the detection bar 12 (which will be reached directly by the light beam which does not intercept the portion of ceramic article T), the linear photoelectric sensors 13 of the detection bar 12, once said light pulses have been received, reconstruct and convert the same into a pixel pattern thus acquiring the aforementioned images, each of which represents the whole portion of the ceramic article T that occupies said defined area. Said operation is repeated at given time intervals so as to acquire a plurality of images of different portions of each ceramic article T; in particular, of the different portions of the ceramic article that, over time, occupy said defined area, which will then be aligned and combined together by the control unit 14 leading to the aforementioned first representation R of each ceramic article T (see in particular Figure 6A), which will then be further modulated according to the actual position taken by the ceramic article T at the various time intervals (as will be better explained in the following) thus leading to the perimeter profile P of the ceramic article T. Even more advantageously but not limitingly, the control unit 14 of the data acquisition assembly 7 comprises a timing device (not illustrated) which activates at least part of the plurality of linear photoelectric sensors 13 of the detection bar 12 at given time intervals, so as to acquire a plurality of images for each ceramic article T to be detected, and is configured to combine (namely, couple or align) one with the other said images acquired for each ceramic article T so as to obtain the first representation R.

Advantageously but not limitingly, said time intervals have a variable duration from about 1.5 ms to about 5 ms; in particular, said time intervals have a duration of approximately 2 ms.

Even more advantageously but not limitingly, the given time intervals are modifiable (namely, they have a modifiable/adjustable duration) according to the speed with which the ceramic articles T move on the conveyor 3 and/or according to their format. For example, in the case in which the conveyor 3 is configured to move the ceramic articles T in the moving direction A with a speed of approximately 60 meters per minute, the data acquisition assembly 7 is configured to acquire one of the aforementioned images every 2 milliseconds.

According to some advantageous but non-limiting embodiments, the plurality of linear photoelectric sensors 13 of the detection bar 12 comprise (in particular, they are) CCD (Charge-Coupled Device) image sensors arranged in succession to one another, namely, one after the other along the detection bar 12, and/or CMOS (Complementary metal-oxide semiconductor) image sensors arranged in succession to one another, namely, one after the other along the detection bar 12, as schematically illustrated in the Figures 2, 3, and 4.

Even more particularly, advantageously but not limitingly, each of said linear photoelectric sensors 13 has a length which varies from about 200mm to about 390mm. Furthermore, said linear photoelectric sensors 13 are advantageously arranged spaced apart from one another along the detection bar 12 by a distance which varies from about 3mm to about 10mm, in particular from about 4mm to about 8mm; even more specifically, about 6mm.

As already mentioned above, according to some advantageous but non-limiting embodiments, the data acquisition assembly 7 is mounted movable relative to the conveyor 3 along the moving direction A so as to be able to adapt the position of the data acquisition assembly 7, in particular of the linear photoelectric sensors 13, to the format of the ceramic article T to be detected in order to avert the risk that the presence of said spacing between one sensor and the next could influence the resolution of the acquired images or their accuracy.

With particular reference to Figures 2, 3 and 4, advantageously but not limitingly, the detection bar 12 comprises a housing 18 inside which the linear photoelectric sensors 13 and a filter and protection unit 19, configured to define a shielding dark window of at least about 4 mm in depth above the series of linear photoelectric sensors 13, are provided so as to minimize the incidence of external light on the various linear photoelectric sensors 13, reducing noise to a minimum and further optimizing the resolution.

Advantageously but not limitingly, each of the photoelectric sensors of the detection bar 12 can be operated independently of the others. Similarly, each of the aforementioned LEDs of the lighting device 11 can be operated independently of the others. In other words, the data acquisition assembly 7 is advantageously modular and the part to be active (therefore to be used) can be increased or reduced on the basis of needs, namely, on the format of the ceramic article T to be detected and/or on the orientation of the detection bar 12, and therefore of the lighting device 11 with respect to the moving direction A.

According to some advantageous but non-limiting embodiments such as those illustrated in the attached figures, the detection bar 12 extends above the conveyor 3 along a direction B, which is inclined at an angle α ranging from about 20° to about 70° relative to the moving direction A; specifically, ranging from about 30° to about 60°. More advantageously, the direction B forms an angle of approximately 45° with the moving direction A. Said orientation allows to acquire information on the whole extension of the ceramic article T to be detected, allowing to simultaneously detect orthogonal sides of the ceramic article T at each time interval. In other words, the detection bar 12 is arranged so as to acquire an instantaneous image of the entire portion of ceramic article T that occupies the aforementioned area of the detection station 6, which makes it possible to acquire information on at least two sides of the ceramic article T (see Figures 2, 6, 6A, 8) at each time interval, so that by combining said information one leads to a complete representation R of the ceramic article on a plane integral with the detection bar 12. Said representation R is then transferred onto a reference plane integral with the conveyor 3 by the processing assembly 9. The processing assembly 9 is, in fact, (advantageously) configured to determine the perimeter profile P of each ceramic article T also according to said inclination angle α.

Advantageously but not limitingly, the detection bar 12 is arranged at a distance from the conveyor 3; in particular, from the moving plane W of the ceramic articles T, of at most about 5cm; in particular, of at most about 2cm; more in particular, of at most about 1cm. This allows, advantageously, to have the resolution necessary to allow the determination of the perimeter profile P of the ceramic article T with the precision of 1/10 of a mm, required in the ceramic field. In detail, advantageously, the smaller the distance between the detection bar 12 and the conveyor 3, in particular the moving plane W, the better the quality of the acquired image.

Furthermore, according to some advantageous but non-limiting embodiments, the data acquisition assembly 7 (in particular, the aforementioned detection bar 12) comprises the position detection unit 8 and the control unit 14 of said data acquisition assembly 7 is configured to estimate the time variation of the position of each ceramic article T moving through the detection station 6 and generate a spatial synchronization signal S. In these cases, advantageously but not limitingly, the detection bar 12 is inclined at an angle α equal to approximately 45° relative to the moving direction A. In other words, in these cases, in use, the control unit 14, based on the images acquired by the detection bar 12, estimates the variation of the position in the moving direction A and the speed of each ceramic article T moving through the detection station 6 so as to generate a spatial synchronization signal S and the processing assembly 9 modifies the first representation R of the ceramic article T according to said spatial synchronization signal S so as to obtain the perimeter profile P of each ceramic article T.

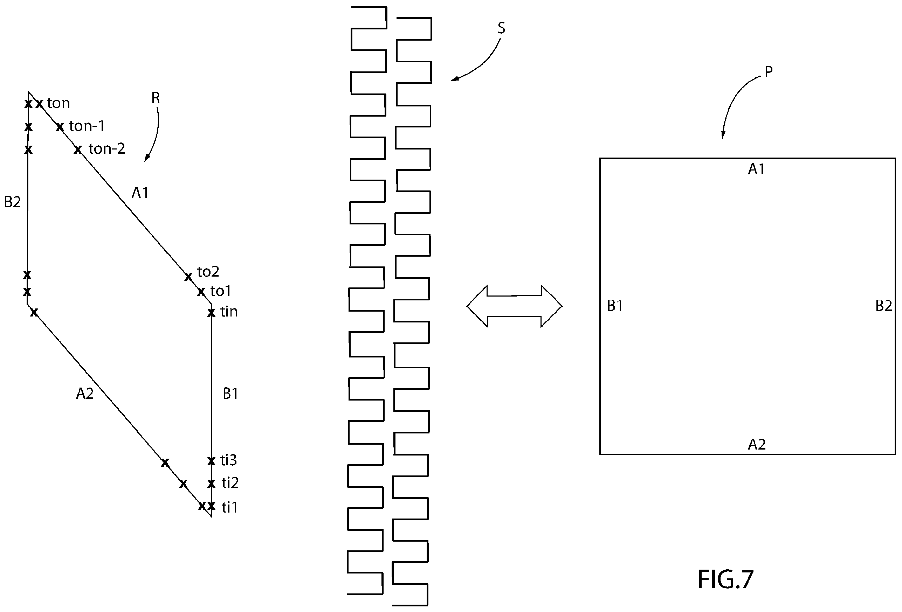

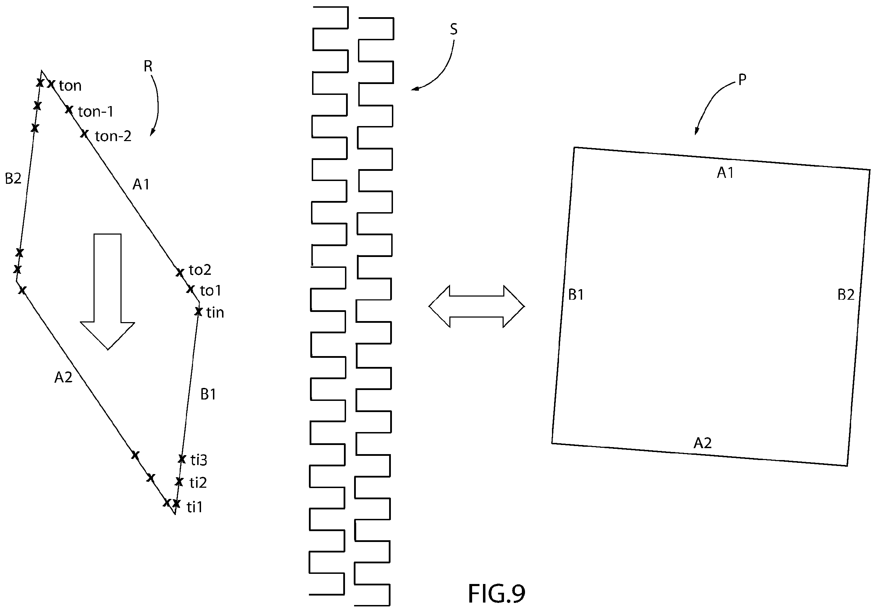

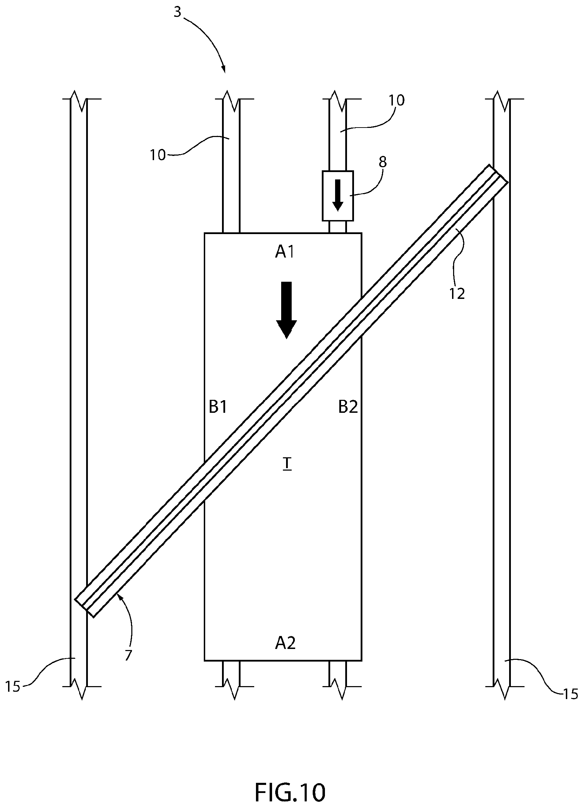

Alternatively or in addition, according to some non-limiting and particularly advantageous embodiments, when the ceramic articles T to be detected have a rectangular shape and are oriented (namely, they move along the moving direction A) with the longer side substantially parallel to the moving direction A (see for example Figure 10), the aforementioned position detection unit 8 comprises (in particular, it is) a sensor, advantageously laser, which is coupled to the conveyor 3 and is configured to detect, advantageously continuously and in actual time, the position of each ceramic article T along the determined path PA and generate a spatial synchronization signal S and the processing assembly 9 is configured to modify the first representation R of the ceramic article T according to said spatial synchronization signal S so as to obtain the perimeter profile P of each ceramic article T (see Figures 7 and 9).

The spatial synchronization signal S therefore provides an indication of how to combine the images acquired at different time intervals by the data acquisition assembly 7 according to the actual physical position taken by the ceramic article T at the instant in which the data acquisition assembly 7 detected the image; even more particularly, the spatial synchronization signal S provides indications about the actual spatial distance between said instantaneous images acquired by the data acquisition assembly 7.

In particular, advantageously but not limitingly, the position detection unit 8 is configured to provide an estimate of the position of each ceramic article with an accuracy of at least about 1/10 of a mm. According to some advantageous but non-limiting embodiments not illustrated, the position detection unit 8 also comprises a further motion sensor (advantageously but not restrictively analogous to the laser motion sensor described above) arranged at the detection station 6 to detect the passage and the movement speed of each ceramic article T that moves at said detection station 6 to generate a further spatial synchronization signal. In this case, the processing assembly 9 is configured to determine the actual profile P of the ceramic article T according to both spatial synchronization signals generated by both motion sensors 8. This advantageously allows greater precision in determining the position of each ceramic article T which moves at the detection station 6 and consequently allows to obtain a more accurate determination of the profile P of each ceramic article T, further reducing the risk of distortions. In detail, the addition of this further motion sensor is particularly advantageous (although not essential) when the ceramic articles T to be detected have a rectangular shape with the longer side having a length much greater than the length of the shorter side and oriented substantially parallel to the moving direction A.

Alternatively, or in addition, according to some advantageous but non-limiting embodiments not illustrated, the data acquisition assembly 7 comprises a further detection bar arranged parallel to the moving direction A and the control unit 14 is configured to generate the aforementioned first representation R of the ceramic article T also according to what is detected by said further detection bar 12. In detail, the addition of said further detection bar 12 is particularly advantageous (although not essential) when the ceramic articles T to be detected have a rectangular shape with the longer side having a length much greater than the length of the shorter side.

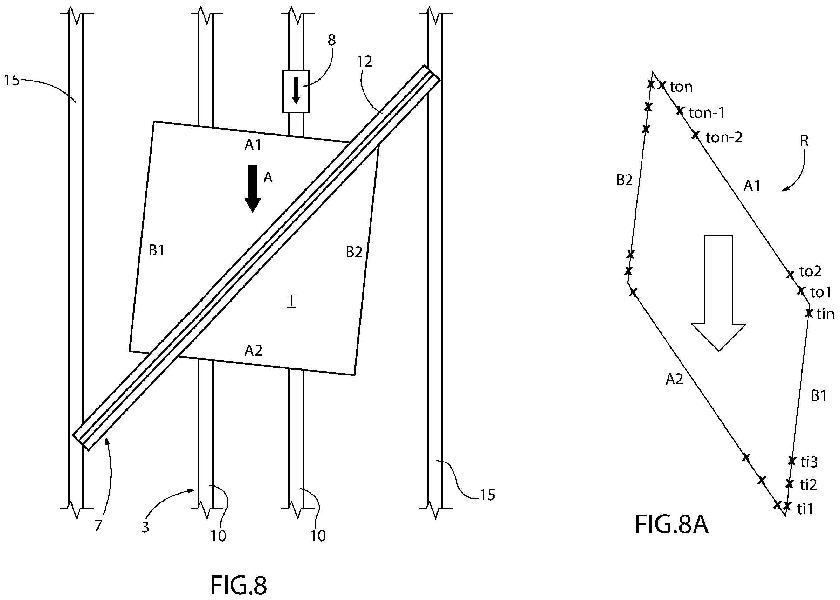

Advantageously but not limitingly, the processing assembly 9 is configured to provide information at least on the length and width of each ceramic article T of the plurality of ceramic articles T and/or on the orientation of each ceramic article T of said plurality of ceramic articles T with respect to an absolute reference system, advantageously integral with the conveyor 3, that is, it allows to know the orientation with which the ceramic article T moves in the area of the detection station 6 (see for example Figure 8).

According to some advantageous but non-limiting embodiments not illustrated, the processing assembly 9 comprises at least one graphical interface (not illustrated) to display the perimeter profile P of each ceramic article T.

According to some advantageous but non-limiting embodiments, the processing assembly 9 comprises (even more particularly, it coincides with) the control unit 14 of the data acquisition assembly 7.

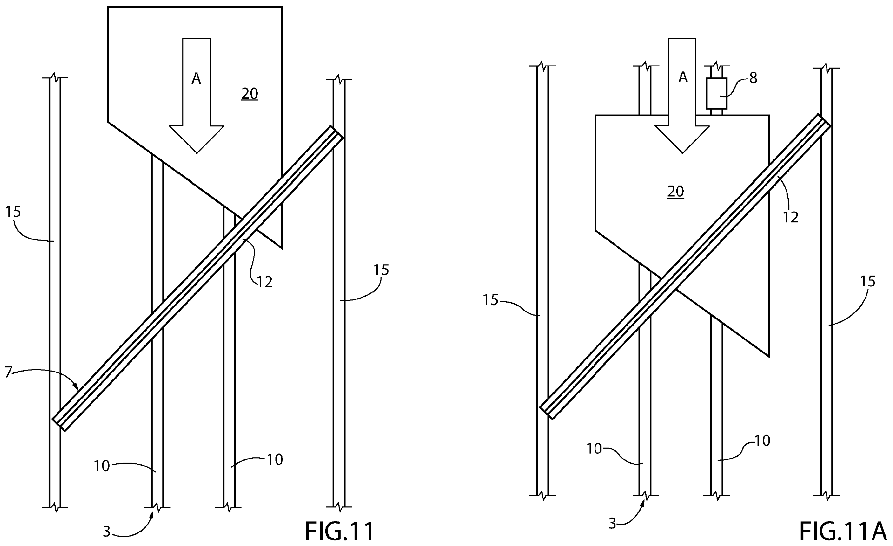

Advantageously but not limitingly, the control unit 14 of the data acquisition assembly 7 comprises a memory storage device (not illustrated) configured to store at least the calibration parameters of the data acquisition assembly 7. Said calibration parameters are advantageously determined by detecting a calibration plate 20 and comparing the actual perimeter profile P of said calibration plate 20 and that which would be processed with the detection system 1 (see Figures 11 and 11A). Said operation must be carried out only once, at the first use of the detection system 1 to take into account the characteristics and limits of the various components, as will be better explained hereinafter.

Furthermore, it is understood that the linear photoelectric sensors 13 of the detection bar 12 could be of any other type, even different from the CCD and CMOS image sensors, provided that they are able to guarantee comparable levels of resolution and precision, for example NMOS sensors.

According to another aspect of the present invention, a detection method to detect ceramic articles T is presented, which is advantageously implemented using the above-described detection system 1.

Advantageously, the detection method comprises the following steps: a moving step, during which the above-described conveyor 3 moves the ceramic article T along a moving path PA in a moving direction A through at least one detection station 6; a data acquisition step, which is (at least partially) simultaneous with the movement step and during which the data acquisition assembly 7 of the detection system 1 acquires data on the ceramic article T, while the ceramic article T moves through the detection station 6 so as to generate a first representation R of the ceramic article T; a position detection step, (at least partially) simultaneous with the moving step and the data acquisition step, during which the aforementioned position detection unit 8 estimates, advantageously continuously and in actual time, the position of the ceramic article T while the ceramic article T moves through the detection station 6 along the moving path PA; and a processing step, (at least partially following the data acquisition step and the position detection step) during which the processing assembly 9 determines the perimeter profile P of the ceramic article T by modulating the first representation R generated in the data acquisition step according to what was detected by the position detection unit 8 in the position detection step.

Advantageously but not limitingly, the data acquisition step comprises, in turn: an image acquisition sub-step, during which the lighting device 11, which advantageously is of the type described above, emits a collimated light beam towards at least one defined area of the detection station 6 to illuminate the ceramic article T from below, which is located at the detection station 6, and the aforementioned detection bar 12 of the data acquisition assembly 7 acquires, at given time intervals, a respective image of said defined area; and an image composition sub-step, during which the control unit 14 generates a first representation R of the ceramic article T according to the images detected by the detection bar 12 during the image acquisition sub-step.

In particular, advantageously but not limitingly, as already explained above in relation to the detection system 1, during the image acquisition sub-step the ceramic article T, moving through the detection station 6, occupies by a portion the defined area (in particular, at least part of the defined area) illuminated by the lighting device 11, by projecting the shadow of said portion onto the detection bar 12, the detection bar 12 (in particular, the linear photoelectric sensors 13) acquires, each given time interval, an image of the portion of the ceramic article T which occupies said area defined based on the light pulses received, and the control unit 14 combines (in particular, aligns) the images acquired by the detection bar 12 in successive instants (which will therefore represent the different portions that occupy said defined area over time) obtaining the aforementioned first representation R of the ceramic article T (see for example Figure 6A).

Advantageously but not limitingly, during the position detection step, the position detection unit 8 (namely, the data acquisition assembly 7 or one or more motion sensors 8, as explained above in relation to the detection system 1) estimates the position of the ceramic article T e generates a spatial synchronization signal S; and during the processing step, the processing assembly 9 modulates the first representation R of the ceramic article T according to said synchronization signal S so as to determine the actual perimeter profile P of the ceramic article T, as schematically illustrated in Figures 7 and 9.

It is understood that said steps can be repeated any number of times to detect the perimeter profile P of a plurality of ceramic articles T (of the same format or of different formats).

Advantageously but not limitingly, the detection method comprises, furthermore, a calibration step, (at least partially) prior to the aforementioned moving step, data acquisition step, position detection step and processing step, which (as already explained in relation to the detection system 1) is to be implemented only once and allows the properties and defects of the detection bar 12 to be taken into account, thereby increasing the accuracy of the detection. In detail, advantageously but not limitingly, as will be explained in the following, during this calibration step calibration parameters are determined and stored within the control unit 14 of the data acquisition assembly 7 which will then be used during the image acquisition step. In other words, advantageously but not limitingly, during the image composition sub-step, the control unit 14 generates the first representation R of each ceramic article T also according to the calibration parameters evaluated in said calibration step, further improving the precision with which the perimeter profile P of each ceramic article T is detected.

In particular, advantageously but not limitingly, said calibration step comprises, in turn: a data storing sub-step, during which the processing assembly 9 acquires an actual perimeter profile of a calibration plate 20; a linearization sub-step, at least partially subsequent to the data storing sub-step, during which the conveyor 3 moves the calibration plate 20 through the detection station 6; the data acquisition assembly 7 acquires data on said calibration plate 20 (while moving through the detection station 6) and determines a first representation R of the calibration plate 20, the position detection unit 8 detects the position of the calibration plate 20 through the detection station 6, and the processing assembly 9 processes a perimeter profile P of the calibration plate 20, modulating the first representation R of the calibration plate 20 according to what is detected by the position detection unit 8 and determines the calibration parameters, based on the comparison between the perimeter profile P processed and the actual perimeter profile stored; and a data transfer sub-step, during which the calibration parameters are transferred and stored in the control unit 14 of the acquisition assembly 7.

According to some advantageous but non-limiting embodiments (such as the one illustrated in Figures 11 and 11A), this calibration plate 20 has the shape of a rectangular trapezium with the inclined side substantially orthogonal to the inclined detection bar 12. Even more in detail according to some advantageous but non-limiting embodiments, the inclined side of the calibration plate 20 has an inclination of about 45°.

It is understood that according to other embodiments not illustrated, the calibration plate 20 could have any other shape, for example it could be square.

The system 1 and method to detect ceramic articles T of the present invention have numerous advantages, among which the following are mentioned.

The detection system 1 and method of the present invention allow to determine the entire perimeter profile P of a ceramic article T, regardless of the format and in an absolute manner, namely, without comparisons with sample or target articles, thanks to the presence of a single data acquisition assembly 7 able to acquire an image of an entire band of the ceramic article T passing through the detection station 6.

The detection system 1 and method of the present invention, thanks to the presence of a single data acquisition assembly 7 and of the position detection unit, allow, on one hand, to know with high precision the reciprocal position of the different sides of the ceramic article T, thus allow, unlike known systems, to acquire precise and accurate information, not only on the sizes of the ceramic article T, but also on the actual shape of each ceramic article T, on the orthogonality of its sides, on the orientation with which moves through the detection station 6 along the path PA.

Furthermore, the detection system 1 and method of the present invention do not require calibration operations at each format change, with considerable advantages in terms of production efficiency, as machine stops due to the need to detect a sample/target for each format are eliminated.

Furthermore, thanks once again to the presence of a single data acquisition assembly 7, and in particular of a single image detection bar 12, able to acquire an image of an entire band of the ceramic article T, the detection system 1 and method of the present invention, unlike the known systems and methods, do not require centring systems, which simplifies the detection system 1 and allows a considerable reduction in costs and dimensions.

## Claims

1. A detection system (1) of ceramic articles (T), said detection system (1) comprises:
a conveyor (3) configured to move a plurality of ceramic articles (T) along a moving path (PA) in a moving direction (A) from an input station (4) to an output station (5) through a detection station (6);
a data acquisition assembly (7), which is arranged at said detection station (6), is configured to acquire data on each ceramic article (T) located at said detection station (6) and comprises, in turn: a lighting device (11) arranged below said conveyor (3) and configured to emit a collimated light beam towards at least a defined area of said detection station (6), at least one detection bar (12), which is arranged above said conveyor (3), comprises a plurality of linear photoelectric sensors (13) and is configured to acquire, at given time intervals, an image of said defined area, and a control unit (14) configured to generate a first representation (R) of each ceramic article (T) according to what said detection bar (12) detected;
a position detection unit (8) configured to estimate the position of each ceramic article (T) of said plurality of ceramic articles (T) moving through said detection station (6) along said moving path (PA);
a processing assembly (9) configured to determine the perimeter profile (P) of each ceramic article (T) of said plurality of ceramic articles (T) according to said first representation (R) generated by said data acquisition assembly (7) and to what said position detection unit (8) estimated.

2. The detection system (1) of ceramic articles (T) according to claim 1, wherein:
said at least one detection bar (12) of said data acquisition assembly (7) extends above said conveyor (3) along a direction (B), which is inclined at an angle (α) ranging from about 20° to about 70°, in particular of about 45°, relative to the moving direction (A); and
said processing assembly (9) is configured to determine the perimeter profile (P) of each ceramic article (T) of said plurality of ceramic articles (T) also according to said inclination angle (α).

3. The detection system (1) of ceramic articles (T) according to any one of the preceding claims, wherein said plurality of linear photoelectric sensors (13) of said detection bar (12) comprises, in particular is made up of, Charged-Coupled Device, CCD, image sensors arranged one after the other and/or Complementary metal-oxide semiconductor, CMOS, image sensors arranged one after the other.

4. The detection system (1) of ceramic articles (T) according to any one of the preceding claims, wherein the detection bar (12) is arranged at a distance from said conveyor (3) of at most about 5cm; in particular, at most about 2cm; more in particular, at most about 1cm.

5. The detection system (1) of ceramic articles (T) according to any one of the preceding claims, wherein:
said conveyor (3) defines a moving plane (W), on which said ceramic articles (T) move;
said lighting device (11) is a LED lamp arranged parallel to the detection bar (12) and comprising a plurality of LEDs (16) aligned with one another and an optical collimation unit (17) configured to collimate the light beam emitted by each one of the LEDs of said plurality of LEDs, so that the light beam intercepts said defined area with an inclination perpendicular to said moving plane (W).

6. The detection system (1) of ceramic articles (T) according to claim 5, wherein each LED (16) of said plurality of LEDs (16) can be operated independently of the others.

7. The detection system (1) of ceramic articles (T) according to any one of the preceding claims, wherein each linear photoelectric sensor (13) of said plurality of linear photoelectric sensors (13) of said detection bar (12) can be operated independently of the others.

8. The detection system (1) of ceramic articles (T) according to any one of the preceding claims, wherein said data acquisition assembly (7) is movable relative to said conveyor (3) along said moving direction (A).

9. The detection system (1) of ceramic articles (T) according to any one of the preceding claims, wherein: said position detection unit (8) comprises (in particular, is made up of) at least one laser motion sensor (8) coupled to said conveyor (3) and configured to detect the position of each ceramic article (T) along said given path (PA) and to generate a spatial synchronization signal (S); and said processing assembly (9) is configured to modify said first representation (R) of the ceramic article (T) according to said synchronization space signal (S) in order to obtain said perimeter profile (P) of each ceramic article (T) of said plurality of ceramic articles (T).

10. The detection system (1) of ceramic articles (T) according to any one of the claims from 1 to 8, wherein:
said data acquisition assembly (7) comprises said position detection unit (8);
said control unit (14) of said data acquisition assembly (7) is configured to estimate the variation over time of the position of each ceramic article (T) moving through said detection station (6) and to generate a synchronization space signal (S); and
said detection bar (12) extends above said conveyor (3) along a direction (B), which is inclined at an angle (α) ranging from about 20° to about 70° relative to said moving direction (A).

11. The detection system (1) of ceramic articles (T) according to claim 9 or 10, wherein: said control unit (14) of said data acquisition assembly (7) comprises a timer device, which activates at least part of the plurality of linear photoelectric sensors (13) of said detection bar (12) at given time intervals so as to acquire a plurality of images for each ceramic article (T) to be detected, and is configured to determine said first representation (R) of each ceramic article (T) of said plurality of ceramic articles (T) by combining said plurality of images acquired for each ceramic article (T); and
said processing assembly (9) is configured to modulate said first representation (R) according to said synchronization space signal (S) so as to obtain said perimeter profile (P) of each ceramic article (T).

12. The detection system (1) of ceramic articles (T) according to any one of the preceding claims, wherein the processing assembly (9) is configured to provide information at least on the length and the width of each ceramic article (T) of said plurality of ceramic articles (T) and/or on the orientation of each ceramic article (T) of said plurality of ceramic articles (T).

13. A detection method to detect the perimeter profile (P) of a ceramic article (T) by means of a detection system (1) according to any one of the claims from 1 to 12; said detection method comprises the following steps:
a moving step, during which said conveyor (3) moves the ceramic article (T) along a moving path (PA) in a moving direction (A) through at least one detection station (6);
a data acquisition step, which is at least partially simultaneous with said moving step and during which said data acquisition assembly (7) of said detection system (1) acquires data on said ceramic article (T), while the ceramic article (T) moves through said detection station (6);
said data acquisition step comprising, in turn, an image acquisition sub-step, during which said lighting device (11) of said data acquisition assembly (7) emits a collimated light beam towards at least a defined area of said detection station (6) and said at least one detection bar (12) of said acquisition assembly (7) acquires, at given time intervals, a relative image of said defined area, and an image composition sub-step, during which said control unit (14) generates a first representation (R) of the ceramic article (T) according to the relative images detected by said detection bar (12) during said image acquisition sub-step;
a position detection step, which is at least partially simultaneous with said transport step and with said data acquisition step and during which said position detection unit (8) estimates the position of the ceramic article (T) as it moves along said moving path (PA) through said detection station (6); and
a processing step, during which said processing assembly (9) determines the perimeter profile (P) of the ceramic article (T), modulating the first representation (R) generated in said data acquisition step according to what was detected during said position detection step.

14. The detection method according to claim 13, wherein:
during said position detection step, said position detection unit (8) detects the position of the ceramic article (T) and generates a synchronization space signal (S);
during said image acquisition sub-step, said ceramic article (T), while moving through the detection station (6), occupies by a portion, at least part of the defined area illuminated by said lighting device (11), projecting the shadow of said portion onto said at least one detection bar (12), said at least one detection bar (12) acquires, each given time interval, an image of the portion of the ceramic article (T) that occupies at least part of said defined area, and said control unit (14) combines the images acquired by said at least one detection bar (12) so as to generate said first representation of the ceramic article (T); and
during said processing step, said processing assembly (9) modulates said first representation (R) of the ceramic article (T) according to said synchronization signal (S) and determines said perimeter profile (P) of the ceramic article (T).

15. The detection method according to claim 13 or 14 and comprising a calibration step, which is at least partially preceding said moving step, data acquisition step, position detection step and processing step, said calibration step comprises, in turn:
a data storing sub-step, during which said processing assembly (9) acquires an actual perimeter profile of a calibration plate (20);
a linearisation sub-step, which is at least partially subsequent to said data storing sub-step and during which said conveyor (3) moves a calibration plate (20) through said detection station (6); said data acquisition assembly (7) acquires data on said calibration plate (20) and determines a first representation (R) of the calibration plate (20); said position detection unit (8) estimates the position of the calibration plate (20), as it moves through said detection station (6); said processing assembly (9) processes a perimeter profile (P) of said calibration plate (20) by modulating said first representation (R) of the calibration plate (20) generated by said data acquisition assembly (7), according to what was detected by said position detection unit (8), and determines calibration parameters based on the comparison between the processed perimeter profile (P) and the actual perimeter profile stored during said data storing sub-step; and
a data transfer sub-step, during which said calibration data is transferred and stored in said control unit (14) of said acquisition assembly (7);
during said image composition sub-step, said control unit (14) generating said first representation (R) of each ceramic article (T) also according to said calibration parameters.

## Patentansprüche

1. Detektionssystem (1) für keramische Artikel (T), wobei das Detektionssystem (1) umfasst:
einen Förderer (3), der dazu konfiguriert ist, eine Vielzahl von Keramikartikeln (T) entlang eines Bewegungspfads (PA) in einer Bewegungsrichtung (A) von einer Eingabestation (4) zu einer Ausgabestation (5) durch eine Detektionsstation (6) zu bewegen;
eine Datenerfassungsbaugruppe (7), die an der Detektionsstation (6) angeordnet ist, so konfiguriert ist, dass sie Daten über jeden Keramikartikel (T) erfasst, der sich an der Detektionsstation (6) befindet, und ihrerseits umfasst: eine Beleuchtungsvorrichtung (11), die unter dem Förderer (3) angeordnet und so konfiguriert ist, dass sie einen kollimierten Lichtstrahl in Richtung auf mindestens einen definierten Bereich der Detektionsstation (6) emittiert, mindestens einen Erkennungsbalken (12), der über dem Förderer (3) angeordnet ist, eine Vielzahl von linearen fotoelektrischen Sensoren (13) umfasst und so konfiguriert ist, dass er in bestimmten Zeitintervallen ein Bild des definierten Bereichs erfasst, und eine Steuereinheit (14), die so konfiguriert ist, dass sie eine erste Darstellung (R) jedes Keramikartikels (T) gemäß dem, was der Erkennungsbalken (12) detektiert hat, erzeugt;
eine Positionsdetektionseinheit (8), die dazu konfiguriert ist, die Position jedes Keramikartikels (T) der Vielzahl von Keramikartikeln (T), die sich durch die Detektionsstation (6) entlang des Bewegungspfads (PA) bewegen, zu schätzen;
eine Verarbeitungsbaugruppe (9), die dazu konfiguriert ist, das Umfangsprofil (P) jedes Keramikartikels (T) der Vielzahl von Keramikartikeln (T) gemäß der ersten Darstellung (R), die von der Datenerfassungsbaugruppe (7) erzeugt wurde, und gemäß dem, was die Positionsdetektionseinheit (8) geschätzt hat, zu bestimmen.

2. Detektionssystem (1) für Keramikartikel (T) nach Anspruch 1, wobei:
sich der mindestens eine Erkennungsbalken (12) der Datenerfassungsbaugruppe (7) über dem Förderer (3) entlang einer Richtung (B) erstreckt, die in einem Winkel (α) im Bereich von etwa 20° bis etwa 700, insbesondere von etwa 450, relativ zur Bewegungsrichtung (A) geneigt ist; und
die Verarbeitungsbaugruppe (9) konfiguriert ist, um das Umfangsprofil (P) jedes Keramikartikels (T) der Vielzahl von Keramikartikeln (T) auch gemäß dem Neigungswinkel (α) zu bestimmen.

3. Detektionssystem (1) für Keramikartikel (T) nach einem der vorhergehenden Ansprüche, wobei die Vielzahl von linearen fotoelektrischen Sensoren (13) des Erkennungsbalkens (12) nacheinander angeordnete Charged-Coupled Device-CCD-Bildsensoren und/oder nacheinander angeordnete Complementary Metal-Oxide-Semiconductor-CMOS-Bildsensoren umfasst, insbesondere daraus besteht.

4. Detektionssystem (1) für Keramikartikel (T) nach einem der vorhergehenden Ansprüche, wobei der Erkennungsbalken (12) in einem Abstand von höchstens etwa 5 cm; insbesondere höchstens etwa 2 cm; weiter insbesondere höchstens etwa 1 cm von dem Förderer (3) angeordnet ist.

5. Detektionssystem (1) für Keramikartikel (T) nach einem der vorhergehenden Ansprüche, wobei:
der Förderer (3) eine Bewegungsebene (W) definiert, auf der sich die Keramikartikel (T) bewegen;
die Beleuchtungsvorrichtung (11) eine LED-Lampe ist, die parallel zum Erkennungsbalken (12) angeordnet ist und eine Vielzahl von LEDs (16), die miteinander ausgerichtet sind, und eine optische Kollimationseinheit (17) umfasst, die konfiguriert ist, um den von jeder der LEDs der Vielzahl von LEDs emittierten Lichtstrahl zu kollimieren, so dass der Lichtstrahl den definierten Bereich mit einer Neigung senkrecht zu der Bewegungsebene (W) abfängt.

6. Detektionssystem (1) für Keramikartikel (T) nach Anspruch 5, wobei jede LED (16) der Vielzahl von LEDs (16) unabhängig von den anderen betrieben werden kann.

7. Detektionssystem (1) für Keramikartikel (T) nach einem der vorhergehenden Ansprüche, wobei jeder lineare fotoelektrische Sensor (13) der Vielzahl von linearen fotoelektrischen Sensoren (13) des Erkennungsbalkens (12) unabhängig von den anderen betrieben werden kann.

8. Detektionssystem (1) für Keramikartikel (T) nach einem der vorhergehenden Ansprüche, wobei die Datenerfassungsbaugruppe (7) relativ zum Förderer (3) entlang der Bewegungsrichtung (A) bewegbar ist.

9. Detektionssystem (1) für Keramikartikel (T) nach einem der vorhergehenden Ansprüche, wobei: die Positionsdetektionseinheit (8) mindestens einen Laserbewegungssensor (8) umfasst (insbesondere daraus besteht), der mit dem Förderer (3) gekoppelt und konfiguriert ist, um die Position jedes Keramikartikels (T) entlang des bestimmten Pfads (PA) zu detektieren und ein räumliches Synchronisationssignal (S) zu erzeugen; und die Verarbeitungsbaugruppe (9) konfiguriert ist, um die erste Darstellung (R) des Keramikartikels (T) gemäß dem Synchronisationsraumsignal (S) zu modifizieren, um das Umfangsprofil (P) jedes Keramikartikels (T) der Vielzahl von Keramikartikeln (T) zu erhalten.

10. Detektionssystem (1) für Keramikartikel (T) nach einem der Ansprüche 1 bis 8, wobei:
die Datenerfassungsbaugruppe (7) die Positionsdetektionseinheit (8) umfasst;
die Steuereinheit (14) der Datenerfassungsbaugruppe (7) dazu konfiguriert ist, die zeitliche Variation der Position jedes Keramikartikels (T), der sich durch die Detektionsstation (6) bewegt, zu schätzen und ein Synchronisationsraumsignal (S) zu erzeugen; und
der Erkennungsbalken (12) sich über dem Förderer (3) entlang einer Richtung (B) erstreckt, die in einem Winkel (α) im Bereich von etwa 20° bis etwa 70° relativ zur Bewegungsrichtung (A) geneigt ist.

11. Detektionssystem (1) für Keramikartikel (T) nach Anspruch 9 oder 10, wobei: die Steuereinheit (14) der Datenerfassungsbaugruppe (7) eine Zeitgebervorrichtung umfasst, die mindestens einen Teil der Vielzahl von linearen fotoelektrischen Sensoren (13) des Erkennungsbalkens (12) in bestimmten Zeitintervallen aktiviert, um eine Vielzahl von Bildern für jeden zu detektierenden Keramikartikel (T) zu erfassen, und dazu konfiguriert ist, die erste Darstellung (R) jedes Keramikartikels (T) der Vielzahl von Keramikartikeln (T) durch Kombinieren der Vielzahl von Bildern, die für jeden Keramikartikel (T) erfasst werden, zu bestimmen; und
die Verarbeitungsbaugruppe (9) konfiguriert ist, um die erste Darstellung (R) gemäß dem Synchronisationsraumsignal (S) zu modulieren, um das Umfangsprofil (P) jedes Keramikartikels (T) zu erhalten.

12. Detektionssystem (1) für Keramikartikel (T) nach einem der vorhergehenden Ansprüche, wobei die Verarbeitungsbaugruppe (9) konfiguriert ist, um Informationen zumindest über die Länge und die Breite jedes Keramikartikels (T) der Vielzahl von Keramikartikeln (T) und/oder über die Ausrichtung jedes Keramikartikels (T) der Vielzahl von Keramikartikeln (T) zu liefern.

13. Detektionsverfahren zum Detektieren des Umfangsprofils (P) eines Keramikartikels (T) mittels eines Detektionssystems (1) nach einem der Ansprüche 1 bis 12; wobei das Detektionsverfahren die folgenden Schritte umfasst:
einen Bewegungsschritt, während dessen der Förderer (3) den Keramikartikel (T) entlang eines Bewegungspfads (PA) in einer Bewegungsrichtung (A) durch mindestens eine Detektionsstation (6) bewegt;
einen Datenerfassungsschritt, der zumindest teilweise gleichzeitig mit dem Bewegungsschritt ist und während dessen die Datenerfassungsbaugruppe (7) des Detektionssystems (1) Daten über den Keramikartikel (T) erfasst, während sich der Keramikartikel (T) durch die Detektionsstation (6) bewegt;
wobei der Datenerfassungsschritt wiederum einen Bilderfassungsunterschritt, während dessen die Beleuchtungsvorrichtung (11) der Datenerfassungsbaugruppe (7) einen kollimierten Lichtstrahl in Richtung auf mindestens einen definierten Bereich der Detektionsstation (6) emittiert und der mindestens eine Erkennungsbalken (12) der Erfassungsbaugruppe (7) in bestimmten Zeitintervallen ein relatives Bild des definierten Bereichs erfasst, und einen Bildzusammensetzungsunterschritt umfasst, während dessen die Steuereinheit (14) eine erste Darstellung (R) des Keramikartikels (T) gemäß den relativen Bildern erzeugt, die von dem Erkennungsbalken (12) während des Bilderfassungsunterschritts detektiert wurden;
einen Positionsdetektionsschritt, der zumindest teilweise gleichzeitig mit dem Transportschritt und mit dem Datenerfassungsschritt ist und während dessen die Positionsdetektionseinheit (8) die Position des Keramikartikels (T) schätzt, während er sich entlang des Bewegungspfads (PA) durch die Detektionsstation (6) bewegt; und
einen Verarbeitungsschritt, während dessen die Verarbeitungsbaugruppe (9) das Umfangsprofil (P) des Keramikartikels (T) bestimmt, indem die in dem Datenerfassungsschritt erzeugte erste Darstellung (R) gemäß dem, was während des Positionsdetektionsschritts detektiert wurde, moduliert wird.

14. Detektionsverfahren nach Anspruch 13, wobei:
während des Positionsdetektionsschritts die Positionsdetektionseinheit (8) die Position des Keramikartikels (T) detektiert und ein Synchronisationsraumsignal (S) erzeugt;
während des Bilderfassungsunterschritts der Keramikartikel (T), während er sich durch die Detektionsstation (6) bewegt, von einem Abschnitt mindestens einen Teil des definierten Bereichs einnimmt, der von der Beleuchtungsvorrichtung (11) beleuchtet wird, indem der Schatten des Abschnitts auf den mindestens einen Erkennungsbalken (12) projiziert wird, der mindestens eine Erkennungsbalken (12) in jedem bestimmte Zeitintervall ein Bild des Abschnitts des Keramikartikels (T) erfasst, der mindestens einen Teil des definierten Bereichs einnimmt, und die Steuereinheit (14) die von dem mindestens einen Erkennungsbalken (12) erfassten Bilder kombiniert, um die erste Darstellung des Keramikartikels (T) zu erzeugen; und
während des Verarbeitungsschritts die Verarbeitungsbaugruppe (9) die erste Darstellung (R) des Keramikartikels (T) gemäß dem Synchronisationssignal (S) moduliert und das Umfangsprofil (P) des Keramikartikels (T) bestimmt.

15. Detektionsverfahren nach Anspruch 13 oder 14 und umfassend einen Kalibrierungsschritt, der dem Bewegungsschritt, dem Datenerfassungsschritt, dem Positionsdetektionsschritt und dem Verarbeitungsschritt zumindest teilweise vorausgeht, wobei der Kalibrierungsschritt wiederum Folgendes umfasst:
einen Datenspeicherungsunterschritt, während dessen die Verarbeitungsbaugruppe (9) ein tatsächliches Umfangsprofil einer Kalibrierplatte (20) erfasst;
einen Linearisierungsunterschritt, der sich zumindest teilweise an den Datenspeicherungsunterschritt anschließt und während dessen der Förderer (3) eine Kalibrierplatte (20) durch die Detektionsstation (6) bewegt; die Datenerfassungsbaugruppe (7) Daten auf der Kalibrierplatte (20) erfasst und eine erste Darstellung (R) der Kalibrierplatte (20) bestimmt; die Positionsdetektionseinheit (8) die Position der Kalibrierplatte (20) schätzt, während sie sich durch die Detektionsstation (6) bewegt; die Verarbeitungsbaugruppe (9) ein Umfangsprofil (P) der Kalibrierplatte (20) verarbeitet, indem die von der Datenerfassungsbaugruppe (7) erzeugte erste Darstellung (R) der Kalibrierplatte (20) gemäß dem, was von der Positionsdetektionseinheit (8) detektiert wurde, moduliert wird, und Kalibrierparameter basierend auf dem Vergleich zwischen dem verarbeiteten Umfangsprofil (P) und dem während des Datenspeicherungsunterschritts gespeicherten tatsächlichen Umfangsprofil bestimmt; und
einen Datenübertragungsunterschritt, während dessen die Kalibrierungsdaten übertragen und in der Steuereinheit (14) der Erfassungsbaugruppe (7) gespeichert werden;
während des Bildzusammensetzungsunterschritts die Steuereinheit (14) die erste Darstellung (R) jedes Keramikartikels (T) auch gemäß den Kalibrierungsparametern erzeugt.

## Revendications

1. Système de détection (1) d'articles en céramique (T), ledit système de détection (1) comprenant :
un convoyeur (3) configuré pour déplacer une pluralité d'articles en céramique (T) le long d'un trajet de déplacement (PA) dans une direction de déplacement (A) d'une station d'entrée (4) à une station de sortie (5) en passant par une station de détection (6) ;
un ensemble d'acquisition de données (7), disposé au niveau de ladite station de détection (6), configuré pour acquérir des données sur chaque article en céramique (T) situé au niveau de ladite station de détection (6) et comprenant à son tour un dispositif d'éclairage (11) disposé sous ledit convoyeur (3) et configuré pour émettre un faisceau lumineux collimaté vers au moins une zone définie de ladite station de détection (6), au moins une barre de détection (12), qui est disposée au-dessus dudit convoyeur (3), comprend une pluralité de capteurs photoélectriques linéaires (13) et est configurée pour acquérir, à des intervalles de temps donnés, une image de ladite zone définie, et une unité de commande (14) configurée pour générer une première représentation (R) de chaque article en céramique (T) en fonction de ce que ladite barre de détection (12) a détecté ;
une unité de détection de position (8) configurée pour estimer la position de chaque article en céramique (T) de ladite pluralité d'articles en céramique (T) se déplaçant à travers ladite station de détection (6) le long dudit trajet de déplacement (PA) ;
un ensemble de traitement (9) configuré pour déterminer le profil périmétrique (P) de chaque article en céramique (T) de ladite pluralité d'articles en céramique (T) en fonction de ladite première représentation (R) générée par ledit ensemble d'acquisition de données (7) et de ce que ladite unité de détection de position (8) a estimé.

2. Système de détection (1) d'articles en céramique (T) selon la revendication 1, dans lequel :
ladite au moins une barre de détection (12) dudit ensemble d'acquisition de données (7) s'étend au-dessus dudit convoyeur (3) le long d'une direction (B) inclinée à un angle (α) allant d'environ 20° à environ 700, en particulier d'environ 450, par rapport à la direction de déplacement (A) ; et
ledit ensemble de traitement (9) est configuré pour déterminer le profil périmétrique (P) de chaque article en céramique (T) de ladite pluralité d'articles en céramique (T) également en fonction dudit angle d'inclinaison (α).

3. Système de détection (1) d'articles en céramique (T) selon l'une quelconque des revendications précédentes, dans lequel ladite pluralité de capteurs photoélectriques linéaires (13) de ladite barre de détection (12) comprend, en particulier est constituée de capteurs d'image à dispositif à couplage de charge CCD, disposés l'un après l'autre et/ou de capteurs d'image à semiconducteur à oxyde métallique complémentaire CMOS, disposés l'un après l'autre.

4. Système de détection (1) d'articles en céramique (T) selon l'une quelconque des revendications précédentes, dans lequel la barre de détection (12) est disposée à une distance dudit convoyeur (3) d'au plus 5 cm environ ; en particulier, d'au plus 2 cm environ ; plus particulièrement, d'au plus 1 cm environ.

5. Système de détection (1) d'articles en céramique (T) selon l'une quelconque des revendications précédentes, dans lequel :
ledit convoyeur (3) définit un plan de déplacement (W) sur lequel se déplacent lesdits articles en céramique (T) ;
ledit dispositif d'éclairage (11) est une lampe à LED disposée parallèlement à la barre de détection (12) et comprenant une pluralité de LED (16) alignées les unes avec les autres et une unité de collimation optique (17) configurée pour collimater le faisceau lumineux émis par chacune des LED de ladite pluralité de LED, de sorte que le faisceau lumineux intercepte ladite zone définie avec une inclinaison perpendiculaire audit plan de déplacement (W).

6. Système de détection (1) d'articles en céramique (T) selon la revendication 5, dans lequel chaque LED (16) de ladite pluralité de LED (16) peut fonctionner indépendamment des autres.

7. Système de détection (1) d'articles en céramique (T) selon l'une quelconque des revendications précédentes, dans lequel chaque capteur photoélectrique linéaire (13) de ladite pluralité de capteurs photoélectriques linéaires (13) de ladite barre de détection (12) peut fonctionner indépendamment des autres.

8. Système de détection (1) d'articles en céramique (T) selon l'une quelconque des revendications précédentes, dans lequel ledit ensemble d'acquisition de données (7) est mobile par rapport audit convoyeur (3) le long de ladite direction de déplacement (A).

9. Système de détection (1) d'articles en céramique (T) selon l'une quelconque des revendications précédentes, dans lequel : ladite unité de détection de position (8) comprend (en particulier, est constituée de) au moins un capteur de mouvement laser (8) couplé audit convoyeur (3) et configuré pour détecter la position de chaque article en céramique (T) le long dudit trajet donné (PA) et pour générer un signal spatial de synchronisation (S) ; et ledit ensemble de traitement (9) est configuré pour modifier ladite première représentation (R) de l'article en céramique (T) en fonction dudit signal spatial de synchronisation (S) afin d'obtenir ledit profil périmétrique (P) de chaque article en céramique (T) de ladite pluralité d'articles en céramique (T).

10. Système de détection (1) d'articles en céramique (T) selon l'une quelconque des revendications de 1 à 8, dans lequel :
ledit ensemble d'acquisition de données (7) comprend ladite unité de détection de position (8) ;
ladite unité de commande (14) dudit ensemble d'acquisition de données (7) est configurée pour estimer la variation dans le temps de la position de chaque article en céramique (T) se déplaçant à travers ladite station de détection (6) et pour générer un signal d'espace de synchronisation (S) ; et
ladite barre de détection (12) s'étend au-dessus dudit convoyeur (3) le long d'une direction (B) qui est inclinée à un angle (α) allant d'environ 20° à environ 70° par rapport à ladite direction de déplacement (A).

11. Système de détection (1) d'articles en céramique (T) selon la revendication 9 ou 10, dans lequel : ladite unité de commande (14) dudit ensemble d'acquisition de données (7) comprend un dispositif de temporisation, qui active au moins une partie de la pluralité de capteurs photoélectriques linéaires (13) de ladite barre de détection (12) à des intervalles de temps donnés de manière à acquérir une pluralité d'images pour chaque article en céramique (T) à détecter, et est configurée pour déterminer ladite première représentation (R) de chaque article en céramique (T) de ladite pluralité d'articles en céramique (T) en combinant ladite pluralité d'images acquises pour chaque article en céramique (T) ; et
ledit ensemble de traitement (9) est configuré pour moduler ladite première représentation (R) en fonction dudit signal spatial de synchronisation (S) afin d'obtenir ledit profil périmétrique (P) de chaque article en céramique (T).

12. Système de détection (1) d'articles en céramique (T) selon l'une quelconque des revendications précédentes, dans lequel l'ensemble de traitement (9) est configuré pour fournir des informations au moins sur la longueur et la largeur de chaque article en céramique (T) de ladite pluralité d'articles en céramique (T) et/ou sur l'orientation de chaque article en céramique (T) de ladite pluralité d'articles en céramique (T).

13. Procédé de détection du profil périmétrique (P) d'un article en céramique (T) au moyen d'un système de détection (1) selon l'une quelconque des revendications 1 à 12 ; ledit procédé de détection comprend les étapes suivantes :
une étape de déplacement, au cours de laquelle ledit convoyeur (3) déplace l'article en céramique (T) le long d'un trajet de déplacement (PA) dans une direction de déplacement (A) à travers au moins une station de détection (6) ;
une étape d'acquisition de données, qui est au moins partiellement simultanée avec ladite étape de déplacement et au cours de laquelle ledit ensemble d'acquisition de données (7) dudit système de détection (1) acquiert des données sur ledit article en céramique (T), tandis que l'article en céramique (T) se déplace à travers ladite station de détection (6) ;
ladite étape d'acquisition de données comprend à son tour une sous-étape d'acquisition d'image, au cours de laquelle ledit dispositif d'éclairage (11) dudit ensemble d'acquisition de données (7) émet un faisceau lumineux collimaté en direction d'au moins une zone définie de ladite station de détection (6) et ladite au moins une barre de détection (12) dudit ensemble d'acquisition (7) acquiert, à des intervalles de temps donnés, une image relative de ladite zone définie, et une sous-étape de composition d'image, au cours de laquelle ladite unité de commande (14) génère une première représentation (R) de l'article en céramique (T) en fonction des images relatives détectées par ladite barre de détection (12) au cours de ladite sous-étape d'acquisition d'image ;
une étape de détection de position, qui est au moins partiellement simultanée avec ladite étape de transport et avec ladite étape d'acquisition de données et au cours de laquelle ladite unité de détection de position (8) estime la position de l'article en céramique (T) au fur et à mesure qu'il se déplace le long dudit trajet de déplacement (PA) à travers ladite station de détection (6) ; et
une étape de traitement, au cours de laquelle ledit ensemble de traitement (9) détermine le profil périmétrique (P) de l'article en céramique (T), en modulant la première représentation (R) générée dans ladite étape d'acquisition de données en fonction de ce qui a été détecté au cours de ladite étape de détection de position.

14. Procédé de détection selon la revendication 13, dans lequel :
au cours de ladite étape de détection de position, ladite unité de détection de position (8) détecte la position de l'article en céramique (T) et génère un signal spatial de synchronisation (S) ;
au cours de ladite sous-étape d'acquisition d'image, ledit article en céramique (T), en se déplaçant dans la station de détection (6), occupe par une portion, au moins une partie de la zone définie éclairée par ledit dispositif d'éclairage (11), projetant l'ombre de ladite portion sur ladite au moins une barre de détection (12), ladite au moins une barre de détection (12) acquiert, chaque intervalle de temps donné, une image de la portion de l'article en céramique (T) qui occupe au moins une partie de ladite zone définie, et ladite unité de commande (14) combine les images acquises par ladite au moins une barre de détection (12) de manière à générer ladite première représentation de l'article en céramique (T) ; et
au cours de ladite étape de traitement, ledit ensemble de traitement (9) module ladite première représentation (R) de l'article en céramique (T) en fonction dudit signal de synchronisation (S) et détermine ledit profil périmétrique (P) de l'article en céramique (T).

15. Procédé de détection selon la revendication 13 ou 14 et comprenant une étape d'étalonnage, qui précède au moins partiellement ladite étape de déplacement, l'étape d'acquisition des données, l'étape de détection de la position et l'étape de traitement, ladite étape d'étalonnage comprend, à son tour :
une sous-étape de stockage des données, au cours de laquelle ledit ensemble de traitement (9) acquiert un profil périmétrique réel d'une plaque d'étalonnage (20) ;
une sous-étape de linéarisation, qui est au moins partiellement postérieure à ladite sous-étape de stockage de données et au cours de laquelle ledit convoyeur (3) déplace une plaque d'étalonnage (20) à travers ladite station de détection (6) ; ledit ensemble d'acquisition de données (7) acquiert des données sur ladite plaque d'étalonnage (20) et détermine une première représentation (R) de la plaque d'étalonnage (20) ; ladite unité de détection de position (8) estime la position de la plaque d'étalonnage (20), au fur et à mesure qu'elle se déplace à travers ladite station de détection (6) ; ledit ensemble de traitement (9) traite un profil périmétrique (P) de ladite plaque d'étalonnage (20) en modulant ladite première représentation (R) de la plaque d'étalonnage (20) générée par ledit ensemble d'acquisition de données (7), en fonction de ce qui a été détecté par ladite unité de détection de position (8), et détermine les paramètres d'étalonnage sur la base de la comparaison entre le profil périmétrique traité (P) et le profil périmétrique réel stocké au cours de ladite sous-étape de stockage de données ; et
une sous-étape de transfert de données, au cours de laquelle lesdites données d'étalonnage sont transférées et stockées dans ladite unité de commande (14) dudit ensemble d'acquisition (7) ;
au cours de ladite sous-étape de composition d'image, ladite unité de commande (14) génère ladite première représentation (R) de chaque article en céramique (T) également en fonction desdits paramètres d'étalonnage.
